# EUROPEAN PATENT APPLICATION

(11) **EP 4 749 669 A1**
(43) Date of publication of application: **27.05.2026**
(21) Application number: 25209373.7
(22) Date of filing: 17.10.2025
(51) Int. Cl.: H01G 2/08, H01G 11/18, H01M 10/613, H01M 10/625, H01G 11/12, H01G 11/82, H01M 10/615

(54) **POWER STORAGE DEVICE**

(30) Priority: 22.11.2024 JP 2024203675
(71) Applicant: TOYOTA JIDOSHA KABUSHIKI KAISHA, Toyota-shi, Aichi-ken 471-8571 (JP)
(72) Inventor: YAMASHITA, Osamu, Toyota-shi, 471-8571 (JP); MORI, Shinichiro, Toyota-shi, 471-8571 (JP); SHIMIZU, Koji, Toyota-shi, 471-8571 (JP); FUJISHIMA, Seigo, Toyota-shi, 471-8571 (JP); KITO, Sumiko, Toyota-shi, 471-8571 (JP); ISHIKAWA, Shinya, Toyota-shi, 471-8571 (JP); TOMITA, Shintaro, Toyota-shi, 471-8571 (JP); YAMASHITA, Yuji, Toyota-shi, 471-8571 (JP); KIMURA, Kenta, Toyota-shi, 471-8571 (JP)
(74) Representative: TBK

(57) **Abstract**

A power storage device includes a plurality of power storage cells (29), and a heat exchange plate (32) disposed between the plurality of power storage cells (29) so as to face respective long side surfaces of the plurality of power storage cells (29) and extending in a long-side direction of the long side surface. In the heat exchanger (32), Young's modulus of a central portion (32c) in a short-side direction of the long side surface is smaller than Young's modulus of an end portion (32b, 32d) in the short-side direction of the long side surface.

## Description

### CROSS REFERENCE TO RELATED APPLICATIONS

This nonprovisional application is based on Japanese Patent Application No. 2024-203675 filed on November 22, 2024 with the Japan Patent Office, the entire contents of which are hereby incorporated by reference.

### BACKGROUND

### Field

The present disclosure relates to a power storage device.

### Description of the Background Art

Various techniques related to power storage devices have been proposed to date. For instance, Japanese Patent Laying-Open No. 2023-123690 discloses a technique in which a heat exchanger is provided between power storage elements constituting a power storage device to absorb expansion and contraction of the power storage elements.

### SUMMARY

However, if, at the time of increase in the amount of expansion or contraction of a power storage element, deformation of a heat exchanger cannot follow the increase, adhesion between the power storage element and the heat exchanger may decrease and heat exchange performance including cooling performance may decrease.

An object of the present disclosure is to provide a power storage device in which decrease in adhesion to a heat exchanger at the time of deformation of a power storage element is hindered.

A power storage device according to an aspect of the present disclosure includes a plurality of power storage elements, and a heat exchanger disposed between the plurality of power storage elements so as to face respective long side surfaces of the plurality of power storage elements and extending in a long-side direction of the long side surface. Young's modulus of a central portion of the heat exchanger in a short-side direction of the long side surface is smaller than Young's modulus of an end portion of the heat exchanger in the short-side direction of the long side surface.

Accordingly, the Young's modulus of the central portion of the heat exchanger is smaller than the Young's modulus of the end portion of the heat exchanger, and thus, the deformation of the central portion of the heat exchanger dependent on the contraction or expansion of the power storage element is relatively allowed with respect to the deformation of the end portion of the heat exchanger. As a result, the adhesion state can be maintained, and decrease in the adhesion between the power storage element and the heat exchanger can be hindered.

**In** an embodiment, when viewed in the long-side direction, a plurality of partition walls forming a plurality of flow passages are formed inside the heat exchanger. A distance between the plurality of partition walls in the central portion of the heat exchanger is larger than a distance between the plurality of partition walls in the end portion of the heat exchanger.

Accordingly, the Young's modulus of the central portion of the heat exchanger can be made smaller than the Young's modulus of the end portion of the heat exchanger. Thus, the deformation of the central portion of the heat exchanger dependent on the contraction or expansion of the power storage element is relatively allowed with respect to the deformation of the end portion of the heat exchanger, and as a result, decrease in the adhesion between the power storage element and the heat exchanger can be hindered.

Furthermore, in an embodiment, when viewed in the long-side direction, a plurality of partition walls forming a plurality of flow passages are formed inside the heat exchanger. A thickness of the partition wall in the end portion of the heat exchanger is larger than a thickness of the partition wall in the central portion of the heat exchanger.

Accordingly, the Young's modulus of the central portion of the heat exchanger can be made smaller than the Young's modulus of the end portion of the heat exchanger. Thus, the deformation of the central portion of the heat exchanger dependent on the contraction or expansion of the power storage element is relatively allowed with respect to the deformation of the end portion of the heat exchanger, and as a result, decrease in the adhesion between the power storage element and the heat exchanger can be hindered.

Furthermore, in an embodiment, when viewed in a first direction orthogonal to both of the long-side direction and the short-side direction, the central portion of the heat exchanger is disposed so as to overlap a central portion of an electrode assembly housed in the power storage element.

Accordingly, the portion in which the amount of contraction or expansion of the power storage element is large and the central portion of the heat exchanger in which relative deformation with respect to the end portion of the heat exchanger is allowed are arranged so as to overlap each other, and as a result, decrease in the adhesion between the power storage element and the heat exchanger can be hindered.

Furthermore, in an embodiment, the power storage element and the heat exchanger are joined to each other with an adhesive. Young's modulus of the adhesive applied to the central portion of the heat exchanger is smaller than Young's modulus of the adhesive applied to the end portion of the heat exchanger.

Accordingly, the Young's modulus of the central portion of the heat exchanger can be made smaller than the Young's modulus of the end portion of the heat exchanger. Thus, the deformation of the central portion of the heat exchanger dependent on the contraction or expansion of the power storage element is relatively allowed with respect to the deformation of the end portion of the heat exchanger, and as a result, decrease in the adhesion between the power storage element and the heat exchanger can be hindered.

The foregoing and other objects, features, aspects, and advantages of the present disclosure will become apparent from the following detailed description on the present disclosure, which will be understood in conjunction with the accompanying drawings.

### BRIEF DESCRIPTION OF THE DRAWINGS

Fig. 1 is a diagram schematically illustrating a vehicle 1 on which a power storage device 2 is mounted.
Fig. 2 is an exploded perspective view illustrating power storage device 2.
Fig. 3 is a perspective view illustrating a power storage cell 29.
Fig. 4 is a plan view illustrating a cooling unit 12 and the like.
Fig. 5 is a perspective view illustrating cooling unit 12.
Fig. 6 is a cross-sectional view illustrating a heat exchange plate 32.
Fig. 7 is a diagram illustrating an example of a configuration of heat exchange plate 32.
Fig. 8 is a graph illustrating respective examples of the Young's modulus of a central portion 32c and the Young's modulus of an end portion 32b, 32d in an elastic region.
Fig. 9 is a diagram illustrating an example of a cross section of heat exchange plate 32.
Fig. 10 is a diagram illustrating an example of a cross section of heat exchange plate 32 according to a variation.
Fig. 11 is a diagram illustrating another example of the cross section of heat exchange plate 32 according to the variation.
Fig. 12 is a diagram illustrating still another example of the cross section of heat exchange plate 32 according to the variation.
Fig. 13 is a diagram illustrating an example of a cross section of heat exchange plate 32 according to another variation.
Fig. 14 is a diagram illustrating an example of a cross section of each of heat exchange plate 32, power storage cell 29, and an electrode assembly 5 according to a variation.
Fig. 15 is a diagram illustrating an example of a cross section of each of heat exchange plate 32, an adhesive, and power storage cell 29 according to a variation.
Fig. 16 is a diagram illustrating an example of a cross section of heat exchange plate 32 according to still another variation.

### DESCRIPTION OF THE PREFERRED EMBODIMENTS

Embodiments of the present disclosure are described in detail below with reference to the drawings. **In** the drawings, the same or corresponding portions are denoted by the same reference characters, which will not be described repeatedly.

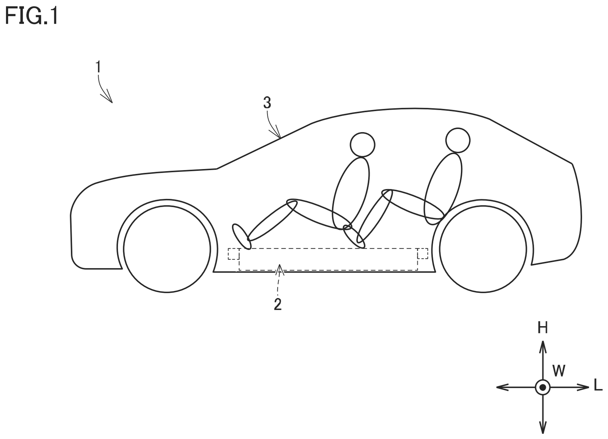

Fig. 1 is a diagram schematically illustrating a vehicle 1 on which a power storage device 2 is mounted. Vehicle 1 includes a vehicle body 3, and power storage device 2 is mounted on a bottom portion of vehicle body 3.

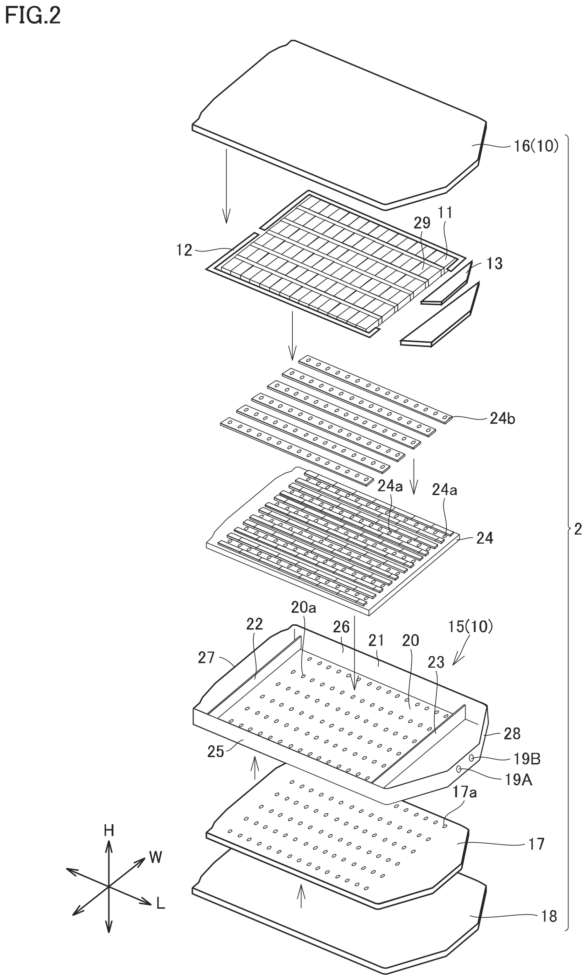

Fig. 2 is an exploded perspective view illustrating power storage device 2. In Fig. 2, a width direction W is a width direction of power storage device 2 and is also a vehicle width direction of vehicle 1. A front-rear direction L is a front-rear direction of power storage device 2 and is also a front-rear direction of vehicle 1. An up-down direction H is an up-down direction in a vertical direction.

Power storage device 2 includes a housing case 10, a power storage module 11, a cooling unit 12, and an electric device 13. Housing case 10 includes a lower case 15, an upper case 16, an insulating plate 17, and a share panel 18.

Lower case 15 is formed so as to open upward, and upper case 16 is provided so as to close an opening of lower case 15.

Lower case 15 includes a bottom plate 20, a peripheral wall 21, partition walls 22 and 23, and an insulating plate 24.

Bottom plate 20 is formed in a plate shape. Peripheral wall 21 is formed along an outer peripheral edge portion of bottom plate 20. Peripheral wall 21 includes a side wall 25, a side wall 26, an end plate 27, and an end plate 28.

Side wall 25 and side wall 26 are situated so as to be arranged in width direction W, and side wall 25 and side wall 26 are formed so as to extend in front-rear direction L.

End plate 27 and end plate 28 are provided apart from each other in front-rear direction L, and end plate 27 and end plate 28 are formed so as to extend in width direction W. End plate 27 connects one end of side wall 25 and one end of side wall 26, and end plate 28 connects the other end of side wall 25 and the other end of side wall 26.

Each of side wall 25, side wall 26, end plate 27, and end plate 28 is provided with a fixing portion, which is described later, and each of the fixing portions is fixed to vehicle body 3.

Partition wall 22 and partition wall 23 are disposed in a region surrounded by bottom plate 20 and peripheral wall 21. Partition wall 22 is disposed so as to be adjacent to end plate 27, and partition wall 22 is formed so as to extend in width direction W.

Partition wall 23 is disposed apart from end plate 28 in front-rear direction L. End plate 28 is also formed so as to extend in width direction W.

End plate 28 is provided with respiratory membranes 19A and 19B. Respiratory membrane 19A and respiratory membrane 19B are waterproof breathable membranes, and for instance, respiratory membranes 19A and 19B are each formed of a GORE-TEX material or the like.

Insulating plate 24 is disposed on a portion of an upper surface of bottom plate 20 that is situated between partition wall 22 and partition wall 23. A plurality of openings 24a are formed in insulating plate 24. Insulating plate 24 is provided with an insulating protector 24b that closes these openings 24a.

Insulating plate 17 is fixed to a lower surface of bottom plate 20, and also, a plurality of openings 17a are formed in insulating plate 17.

In addition, a plurality of openings 20a are formed in bottom plate 20. Openings 24a, openings 20a, and openings 17a are arranged in the up-down direction relative to each other.

Share panel 18 is disposed under insulating plate 17, and an outer peripheral edge portion of share panel 18 is fixed to the lower surface of bottom plate 20. Share panel 18 is formed so as to cover insulating plate 17 and the lower surface of bottom plate 20.

Power storage module 11 is disposed over an upper surface of insulating plate 24. Electric device 13 is disposed between partition wall 23 and end plate 28. Power storage module 11 includes a plurality of power storage cells 29. The plurality of power storage cells 29 are arranged at intervals in front-rear direction L and arranged at intervals in width direction W. Power storage cell 29 may be constituted by a nickel-metal hydride battery or a lithium ion battery, or may be constituted by a power storage element, such as a capacitor.

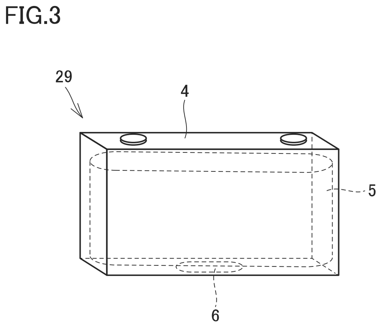

Fig. 3 is a perspective view illustrating power storage cell 29. Power storage cell 29 includes a cell case 4 and an electrode assembly 5 housed in cell case 4. Cell case 4 includes a bottom plate, and a smoke discharge valve 6 is formed on the bottom plate of cell case 4. Each of power storage cells 29 is disposed so that smoke discharge valve 6 is situated over opening 24a of insulating plate 24 illustrated in Fig. 2.

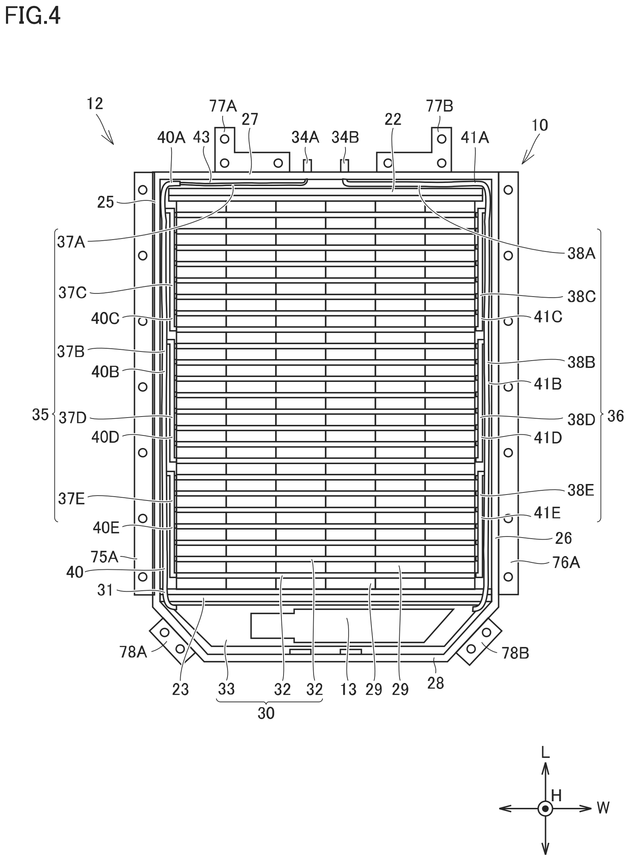

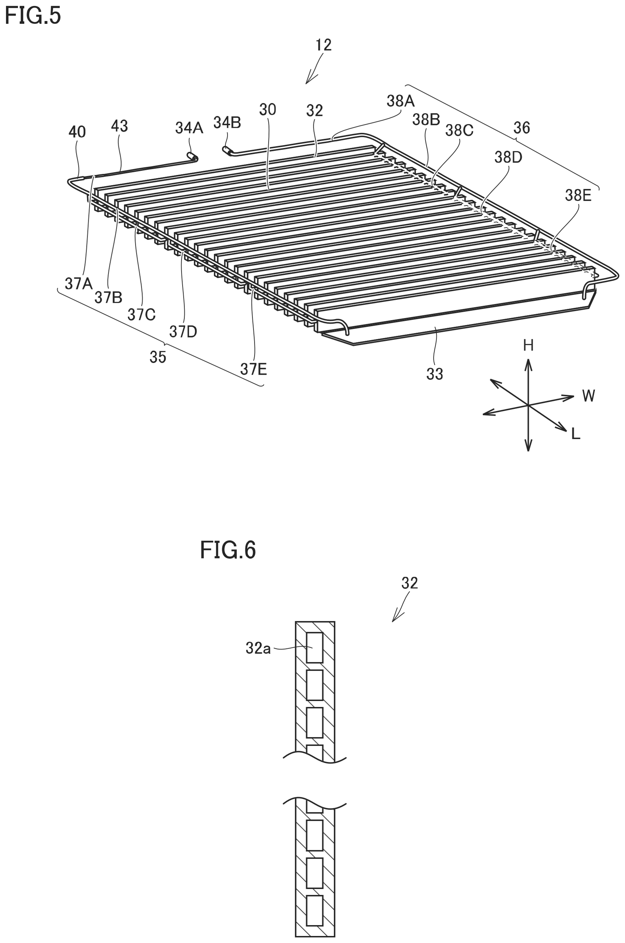

Fig. 4 is a plan view illustrating cooling unit 12 and the like, and Fig. 5 is a perspective view illustrating cooling unit 12. In Fig. 5, power storage cell 29 and the like are not illustrated.

Referring to Figs. 4 and 5, cooling unit 12 includes a heat exchange unit 30, a coolant pipe 31, and a thermal insulation member 40. Heat exchange unit 30 includes a plurality of heat exchange plates 32 and a heat exchange plate 33.

The plurality of heat exchange plates 32 are disposed at intervals in front-rear direction L. Each of heat exchange plates 32 is disposed so as to extend in width direction W.

The plurality of power storage cells 29 arranged in width direction W are disposed between heat exchange plates 32 adjacent to each other in front-rear direction L. Fig. 6 is a cross-sectional view illustrating heat exchange plate 32. As illustrated in Fig. 6, a plurality of flow passages 32a of a coolant are formed at intervals in heat exchange plate 32 in up-down direction H.

Referring again to Figs. 4 and 5, coolant pipe 31 is disposed in housing case 10, and coolant pipe 31 includes a supply pipe 35 and a discharge pipe 36.

Supply pipe 35 is connected to a supply portion 34A, and supply portion 34A is inserted into an insertion hole formed in end plate 27 and fixed to end plate 27.

Supply pipe 35 includes a main supply pipe 37A, a main supply pipe 37B, and branch pipes 37C, 37D, and 37E.

Main supply pipe 37A is disposed between partition wall 22 and end plate 27 so as to extend in width direction W and formed so as to extend toward side wall 25.

Main supply pipe 37B is connected to an end portion of main supply pipe 37A and formed so as to extend in front-rear direction L along side wall 25.

Each of branch pipes 37C, 37D, and 37E is disposed below main supply pipe 37B and connected to main supply pipe 37B. Branch pipes 37C, 37D, and 37E are disposed at intervals in front-rear direction L.

Connection portions between main supply pipe 37B and branch pipes 37C, 37D, and 37E are provided at intervals in front-rear direction L.

The plurality of heat exchange plates 32 disposed at intervals in front-rear direction L are connected to branch pipe 37C. Similarly, the plurality of heat exchange plates 32 disposed at intervals in front-rear direction L are also connected to branch pipes 37D and 37E.

Heat exchange plate 33 is connected to an end portion of main supply pipe 37B on the end plate 28 side. Heat exchange plate 33 is disposed on a portion of the upper surface of bottom plate 20 that is situated between partition wall 23 and end plate 28. An insulating plate is disposed between heat exchange plate 33 and bottom plate 20. Electric device 13 is disposed on an upper surface of heat exchange plate 33. Electric device 13 includes, for instance, a battery ECU, a junction box, and the like.

Discharge pipe 36 includes a main discharge pipe 38A, a main discharge pipe 38B, and branch pipes 38C, 38D, and 38E.

Discharge pipe 36 is connected to discharge portion 34B, and discharge portion 34B is inserted into an insertion hole formed in end plate 27 and fixed to end plate 27. The two insertion holes of end plate 27 are formed apart from each other in width direction W.

Main discharge pipe 38A is disposed between partition wall 22 and end plate 27 so as to extend in width direction W and formed so as to extend toward side wall 26.

Main discharge pipe 38B is connected to an end portion of main discharge pipe 38A and formed so as to extend along side wall 26.

Each of branch pipes 38C, 38D, and 38E is disposed below main discharge pipe 38B and connected to main discharge pipe 38B. Branch pipes 38C, 38D, and 38E are disposed at intervals in front-rear direction L.

The plurality of heat exchange plates 32 disposed at intervals in front-rear direction L are connected to branch pipe 38C. Similarly, the plurality of heat exchange plates 32 disposed at intervals in front-rear direction L are also connected to branch pipes 38D and 38E. Heat exchange plate 33 is connected to an end portion of main discharge pipe 38B on the end plate 28 side.

Thermal insulation member 40 includes thermal insulation members 40A, 40B, 40C, 40D, and 40E, and thermal insulation members 41A, 41B, 41C, 41D, and 41E.

Thermal insulation member 40A covers part of main supply pipe 37A. On the other hand, part of main supply pipe 37A is exposed from thermal insulation member 40A. Thus, in main supply pipe 37A, an exposed portion 43 is formed, which is exposed inside housing case 10.

Thermal insulation member 40A is formed so as to cover a connection portion of main supply pipe 37A and main supply pipe 37B, which is included in main supply pipe 37A.

Thermal insulation member 40B covers main supply pipe 37B. Similarly, thermal insulation members 40C, 40D, and 40E cover branch pipes 37C, 37D, and 37E, respectively. Thermal insulation members 41A and 41B cover main discharge pipes 38A and 38B, respectively, and thermal insulation members 41C, 41D, and 41E cover branch pipes 38C, 38D, and 38E, respectively.

As illustrated in Fig. 4, a fixing portion 75A is formed on an outer surface of side wall 25, and similarly, a fixing portion 76A is formed on an outer surface of side wall 26.

Fixing portions 77A and 77B are formed on an outer surface of end plate 27, and fixing portions 78A and 78B are formed on an outer surface of end plate 28.

Fixing portions 77A and 77B are fixed to vehicle body 3 by fastening members. For instance, vehicle body 3 includes side sills disposed apart from each other in width direction W, a cross member connecting the side sills, and a floor panel, and fixing portions 77A and 77B are fixed to the cross member. Fixing portions 77A and 77B may be fixed to the floor panel.

Fixing portion 75A is formed so as to project in width direction W from the outer surface of side wall 25. Fixing portion 76A is formed so as to project in width direction W from the outer surface of side wall 26. Fixing portions 75A and 76A are fixed to the side sills of vehicle body 3 by fastening members.

Power storage device 2 with the foregoing configuration is described.

Referring to Fig. 2, when power storage module 11 is cooled, a coolant C is supplied to cooling unit 12. Then, referring to Fig. 4, coolant C is supplied from supply portion 34A to supply pipe 35. Specifically, coolant C is supplied to main supply pipe 37A. After that, coolant C enters main supply pipe 37B. Part of coolant C that has entered main supply pipe 37A enters branch pipes 37C, 37D, and 37E.

Coolant C that has entered branch pipes 37C, 37D, and 37E is supplied to the plurality of heat exchange plates 32 connected to branch pipes 37C, 37D, and 37E.

By supplying coolant C to the plurality of heat exchange plates 32, power storage cells 29 disposed between heat exchange plates 32 are cooled. On the other hand, coolant C flowing in heat exchange plates 32 is warmed by heat from power storage cells 29.

The plurality of heat exchange plates 32 are connected to branch pipes 38C, 38D, and 38E, and coolant C warmed in heat exchange plates 32 enters branch pipes 38C, 38D, and 38E.

Branch pipes 38C, 38D, and 38E are connected to main discharge pipe 38A, and coolant C passes through main discharge pipe 38A to be discharged from discharge portion 34B to the outside of housing case 10. Discharge portion 34B is connected to a radiator (not illustrated) or the like, and coolant C is cooled by the radiator or the like. After that, coolant C that has been cooled is supplied to supply portion 34A again.

Furthermore, heat exchange plate 33 is connected to an end portion of main discharge pipe 38A, and electric device 13 is cooled by heat exchange plate 33. Heat exchange plate 33 is connected to an end portion of main discharge pipe 38B, and coolant C enters main discharge pipe 38B.

Heat exchange plate 32 is disposed between the plurality of power storage cells 29 so as to face respective side surfaces of the plurality of power storage cells 29, which lie in a long-side direction (width direction W) and are each referred to as a long side surface hereinafter. Heat exchange plate 32 is provided so as to extend in the long-side direction of the long side surface of each of the plurality of power storage cells 29 (i.e. in width direction W). Power storage cell 29 and heat exchange plate 32 are joined to each other with an adhesive. As the adhesive, for instance, a known structural adhesive having relatively high thermal conductivity may be used from among an acrylic adhesive, an epoxy-based adhesive, and a urethane-based adhesive.

In power storage device 2 structured as described above, expansion and contraction occur in each of power storage cells 29 when charging and discharging are performed. Deformation of power storage cell 29 when expansion or contraction occurs is absorbed by deformation of heat exchange plate 32 provided between power storage cells 29. Accordingly, a certain shape of power storage device 2 as a whole is maintained.

However, if, at the time of increase in the amount of expansion or contraction of power storage cell 29, deformation of heat exchange plate 32 cannot follow the increase, adhesion between power storage cell 29 and heat exchange plate 32 may decrease and heat exchange performance including cooling performance may decrease.

Thus, in the present embodiment, the Young's modulus of a central portion of heat exchange plate 32 in a short-side direction of the long side surface of power storage cell 29 (i.e. in up-down direction H) is made smaller than the Young's modulus of an end portion of heat exchange plate 32 in the short-side direction of the long side surface.

Accordingly, the Young's modulus of the central portion of heat exchange plate 32 is smaller than the Young's modulus of the end portion of heat exchange plate 32, and as a result, the deformation of the central portion of heat exchange plate 32 dependent on the contraction or expansion of power storage cell 29 is relatively allowed with respect to the deformation of the end portion of heat exchange plate 32. Thus, the adhesion state between power storage cell 29 and heat exchange plate 32 can be maintained, and decrease in the adhesion between power storage cell 29 and heat exchange plate 32 can be hindered.

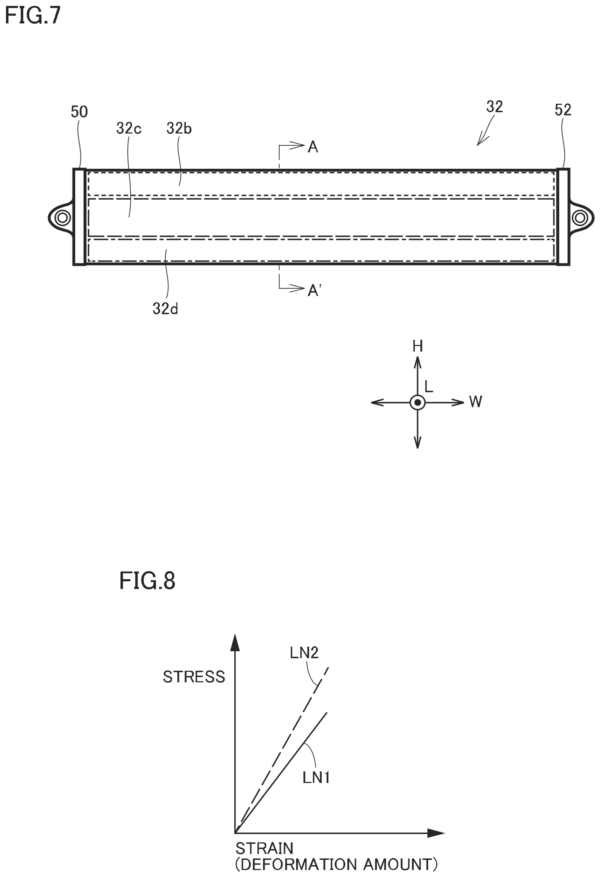

A specific configuration of heat exchange plate 32 of the power storage device according to the present embodiment is described with reference to Figs. 7, 8, and 9.

Fig. 7 is a diagram illustrating an example of the configuration of heat exchange plate 32. As illustrated in Fig. 7, heat exchange plate 32 has a rectangular shape when viewed in front-rear direction L. Heat exchange plate 32 has a shape that is hollow inside. A plurality of partition walls are provided inside heat exchange plate 32. A plurality of flow passages of the coolant are formed inside heat exchange plate 32 by the plurality of partition walls. A connection portion 50 connected to supply pipe 35 is provided on one end portion of heat exchange plate 32 in width direction W. A connection portion 52 connected to discharge pipe 36 together with heat exchange plate 32 is provided on the other end portion of heat exchange plate 32 in width direction W. Thus, the coolant supplied from connection portion 50 connected to supply pipe 35 flows through the flow passage inside heat exchange plate 32 from one end portion toward the other end portion, and then is discharged from connection portion 52 to discharge pipe 36.

Heat exchange plate 32 is formed of, for instance, metal having high thermal conductivity, such as aluminum, or resin. Heat exchange plate 32 is manufactured by, for instance, attaching connection portions 50 and 52 to a hollow aluminum member formed by extrusion processing. In the present embodiment, heat exchange plate 32 is configured so that the Young's modulus of the central portion of heat exchange plate 32, which is the portion situated relatively centrally in heat exchange plate 32, is smaller than the Young's modulus of the end portion of heat exchange plate 32, which is the portion situated relatively on the end side in heat exchange plate 32. In Fig. 7, the Young's modulus of a central portion 32c of heat exchange plate 32 (see the long broken line frame in the center in up-down direction H) is made smaller than the Young's modulus of each of an end portion 32b of heat exchange plate 32 (see the short broken line frame on the upper side in up-down direction H) and an end portion 32d of heat exchange plate 32 (see the dot-dash line frame on the lower side in up-down direction H). That is, the region of the long broken line frame in the center in up-down direction H in Fig. 7 corresponds to the "central portion" of heat exchange plate 32, and the region of the short broken line frame on the upper side in up-down direction H in Fig. 7 and the region of the dot-dash line frame on the lower side in up-down direction H in Fig. 7 each correspond to the "end portion" of heat exchange plate 32.

The Young's modulus of central portion 32c indicates a ratio between strain (deformation amount) and stress in front-rear direction L in central portion 32c of heat exchange plate 32. Fig. 8 is a graph illustrating respective examples of the Young's modulus of central portion 32c and the Young's modulus of end portion 32b, 32d in an elastic region. The vertical axis in Fig. 8 indicates the stress. The horizontal axis in Fig. 8 indicates the strain (deformation amount). LN1 in Fig. 8 represents the example of the Young's modulus of central portion 32c. LN2 in Fig. 8 represents the example of the Young's modulus of end portion 32b. The value of the Young's modulus of end portion 32d is the same as that of the Young's modulus of end portion 32b. As indicated by LN1 and LN2 in Fig. 8, heat exchange plate 32 is configured so that the Young's modulus of central portion 32c is smaller than the Young's modulus of end portion 32b, 32d.

More specifically, in the present embodiment, heat exchange plate 32 is configured so that a distance between the plurality of partition walls included in central portion 32c in up-down direction H is made larger than a distance between the plurality of partition walls included in end portion 32b, 32d in up-down direction H.

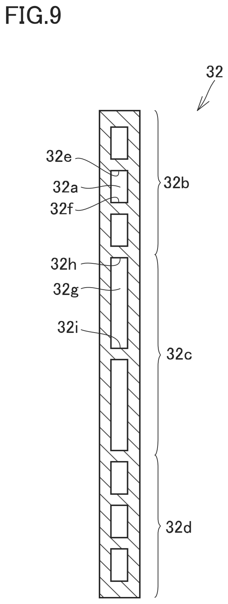

Fig. 9 is a diagram illustrating an example of a cross section of heat exchange plate 32. In Fig. 9, an A-A' cross section of heat exchange plate 32 in Fig. 7 is depicted. As illustrated in Fig. 9, the plurality of flow passages 32a are formed in end portions 32b and 32d of heat exchange plate 32. In Fig. 9, three flow passages 32a are formed in each of end portion 32b and end portion 32d. Flow passage 32a is formed by a partition wall 32e and a partition wall 32f.

Similarly, a plurality of flow passages 32g are formed in central portion 32c of heat exchange plate 32 in up-down direction H. In Fig. 9, two flow passages 32g are formed. Flow passage 32g is formed by a partition wall 32h and a partition wall 32i.

The distance between partition wall 32h and partition wall 32i in flow passage 32g in central portion 32c is made larger than the distance between partition wall 32e and partition wall 32f in flow passage 32a in end portion 32b, 32d. Thus, heat exchange plate 32 is configured so that the Young's modulus of central portion 32c is made smaller than the Young's modulus of end portion 32b, 32d.

When charging or discharging is performed in power storage cell 29, power storage cell 29 may expand or contract. For instance, when power storage cell 29 expands, force acts on the joined heat exchange plate 32 in a direction in which heat exchange plate 32 is compressed along front-rear direction L due to the expansion of power storage cell 29. On the other hand, when power storage cell 29 contracts, force acts on the joined heat exchange plate 32 in the opposite direction of the direction in which heat exchange plate 32 is compressed along front-rear direction L due to the contraction of power storage cell 29. The expansion amount and contraction amount of power storage cell 29 tend to be larger in central portion 32c of heat exchange plate 32 than in end portion 32b, 32d of heat exchange plate 32. When the Young's modulus of central portion 32c of heat exchange plate 32 is smaller than the Young's modulus of end portion 32b, 32d of heat exchange plate 32, the deformation of central portion 32c is relatively allowed with respect to the deformation of end portion 32b, 32d. Thus, even when power storage cell 29 is deformed, the adhesion state between central portion 32c of heat exchange plate 32 and power storage cell 29 is maintained, and decrease in the adhesion is hindered.

As described above, in power storage device 2 of the present embodiment, the deformation of central portion 32c of heat exchange plate 32 dependent on the contraction or expansion of power storage cell 29 is relatively allowed with respect to the deformation of end portion 32b, 32d of heat exchange plate 32. Thus, the adhesion state between central portion 32c of heat exchange plate 32 and power storage cell 29 can be maintained, and decrease in the adhesion between power storage cell 29 and heat exchange plate 32 can be hindered. Accordingly, it is enabled to provide the power storage device in which decrease in the adhesion to the heat exchanger at the time of deformation of the power storage element is hindered.

Variations are described below.

Although in the above-described embodiment, the case where end portion 32b and end portion 32d have respective regions the same in area and each have three flow passages 32a is described as an example, regions having different areas may be set as end portion 32b and end portion 32d.

Furthermore, although in the above-described embodiment, the case where a plurality of flow passages the same in size are provided in central portion 32c and end portion 32b, 32d is described as an example, it is just required that the distance between the partition walls in end portion 32b, 32d be smaller than the distance between the partition walls in central portion 32c, and flow passages having different sizes may be provided.

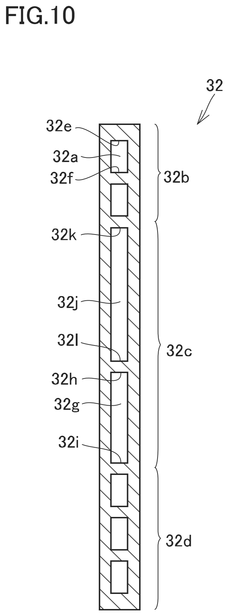

Fig. 10 is a diagram illustrating an example of a cross section of heat exchange plate 32 according to a variation. As illustrated in Fig. 10, a region having an area smaller than that of end portion 32d may be set as end portion 32b. Furthermore, a first distance between a partition wall 32k and a partition wall 32l in a flow passage 32j in central portion 32c and a second distance between partition wall 32h and partition wall 32i in flow passage 32g in central portion 32c may both be made larger than a third distance between partition wall 32e and partition wall 32f in flow passage 32a in end portion 32b, 32d, and the first distance and the second distance may be made different from each other. Also in this case, the Young's modulus of central portion 32c of heat exchange plate 32 can be made smaller than the Young's modulus of end portion 32b, 32d of heat exchange plate 32.

Furthermore, although in the above-described embodiment, the case where a plurality of flow passages are formed in central portion 32c is described as an example, a single flow passage may be formed in central portion 32c.

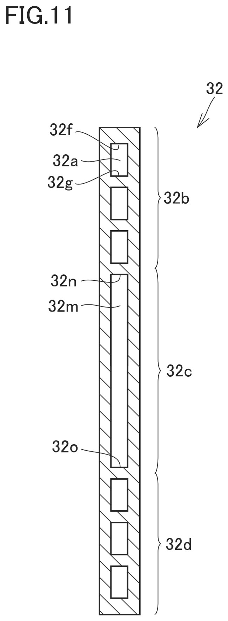

Fig. 11 is a diagram illustrating another example of the cross section of heat exchange plate 32 according to the variation. As illustrated in Fig. 11, a single flow passage 32m may be formed in central portion 32c. Flow passage 32m is formed by a partition wall 32n and a partition wall 32o. The distance between partition wall 32n and partition wall 32o is larger than the distance between partition wall 32e and partition wall 32f in flow passage 32a. Three flow passages 32a are formed in each of end portions 32b and 32d. Also in this case, the Young's modulus of central portion 32c of heat exchange plate 32 can be made smaller than the Young's modulus of end portion 32b, 32d of heat exchange plate 32.

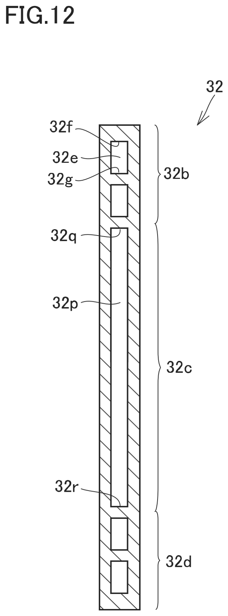

Fig. 12 is a diagram illustrating still another example of the cross section of heat exchange plate 32 according to the variation. As illustrated in Fig. 12, a single flow passage 32p may be formed in central portion 32c. Flow passage 32p is formed by a partition wall 32q and a partition wall 32r. The distance between partition wall 32q and partition wall 32r is larger than the distance between partition wall 32e and partition wall 32f in flow passage 32a. Three flow passages 32a are formed in each of end portions 32b and 32d. Also in this case, the Young's modulus of central portion 32c of heat exchange plate 32 can be made smaller than the Young's modulus of end portion 32b, 32d of heat exchange plate 32.

Furthermore, although in the above-described embodiment, the case where heat exchange plate 32 is configured so that the distance between the partition walls in central portion 32c is larger than the distance between the partition walls in end portion 32b, 32d is described as an example, heat exchange plate 32 may be configured so that the thickness of the partition wall in central portion 32c is smaller than the thickness of the partition wall in end portion 32b, 32d.

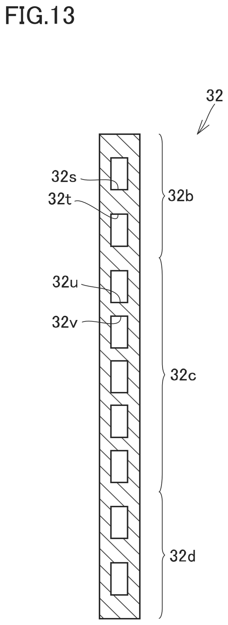

Fig. 13 is a diagram illustrating an example of a cross section of heat exchange plate 32 according to another variation. As illustrated in Fig. 13, a plurality of flow passages including a partition wall formed by a wall surface 32s and a wall surface 32t are formed in end portion 32b, 32d of heat exchange plate 32. Similarly, in central portion 32c of heat exchange plate 32, a plurality of flow passages including a partition wall formed by a wall surface 32u and a wall surface 32v are formed. The thickness of the partition wall formed by wall surfaces 32u and 32v is smaller than the thickness of the partition wall formed by wall surfaces 32s and 32t. Also in this case, the Young's modulus of central portion 32c of heat exchange plate 32 can be made smaller than the Young's modulus of end portion 32b, 32d of heat exchange plate 32.

Furthermore, although in the above-described embodiment, the case where central portion 32c is set so that the center of central portion 32c, which is based on a center line of heat exchange plate 32 in up-down direction H, corresponds with the center line is described as an example, the method of setting central portion 32c is not limited to the above-described method. For instance, central portion 32c of heat exchange plate 32 may be arranged so as to overlap a central portion of electrode assembly 5, which is housed in power storage cell 29, in the short-side direction (up-down direction H) when viewed in a first direction orthogonal to both of the long-side direction (width direction W) and the short-side direction (up-down direction H) of the heat exchanger.

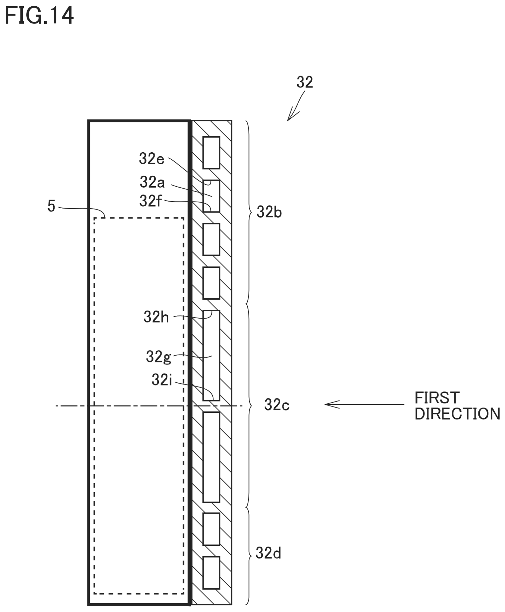

Fig. 14 is a diagram illustrating an example of a cross section of each of heat exchange plate 32, power storage cell 29, and electrode assembly 5 according to a variation. As illustrated in Fig. 14, for instance, a case is assumed in which electrode assembly 5 is housed in power storage cell 29 adjacent to heat exchange plate 32. The first direction in Fig. 14 indicates the direction orthogonal to both of width direction W and up-down direction H. The dot-dash line in Fig. 14 indicates a center line of electrode assembly 5 in up-down direction H. In Fig. 14, the center line of electrode assembly 5 and the center line of central portion 32c are arranged so as to correspond with each other.

Due to this arrangement, the portion in which the amount of contraction or expansion of power storage cell 29 is large overlaps central portion 32c in which relative deformation with respect to end portions 32b and 32d is allowed, and accordingly, decrease in the adhesion between power storage cell 29 and heat exchange plate 32 can be hindered. With reference to Fig. 14, the case where central portion 32c is set so that the central line of electrode assembly 5 and the central line of central portion 32c correspond with each other is described as an example. However, it is just required that at least the central portion of electrode assembly 5 and central portion 32c be arranged so as to overlap each other, and the present embodiment is not limited to both of the central lines corresponding with each other.

Furthermore, in the above-described embodiment, the case where heat exchange plate 32 is configured so that the distance between the partition walls in central portion 32c is larger than the distance between the partition walls in end portion 32b, 32d is described as an example, but for instance, the Young's modulus of the adhesive applied to central portion 32c of heat exchange plate 32 and the Young's modulus of the adhesive applied to end portion 32b, 32d of heat exchange plate 32 may be made different from each other.

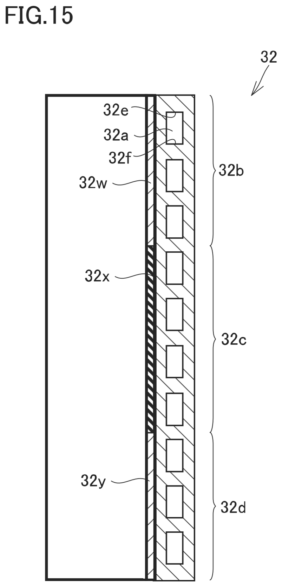

Fig. 15 is a diagram illustrating an example of a cross section of each of heat exchange plate 32, the adhesive, and power storage cell 29 according to a variation. As illustrated in Fig. 15, inside heat exchange plate 32, the plurality of flow passages 32a are formed in central portion 32c and end portions 32b and 32d. On the other hand, heat exchange plate 32 is joined to power storage cell 29 by an adhesive layer 32w corresponding to end portion 32b, an adhesive layer 32x corresponding to central portion 32c, and an adhesive layer 32y corresponding to end portion 32d. At this time, heat exchange plate 32 is configured so that the Young's modulus of the adhesive constituting adhesive layer 32x is smaller than the Young's modulus of the adhesive constituting adhesive layer 32w, 32y. The Young's modulus of the adhesive may be changed, for instance, using a known technique, and may be changed, for instance, depending on the type, material, or amount of the adhesive, the thickness of the adhesive layer, and the like. Also in this case, the Young's modulus of central portion 32c of heat exchange plate 32 can be made smaller than the Young's modulus of end portion 32b, 32d of heat exchange plate 32.

Furthermore, although in the above-described embodiment, the case where the partition wall is formed by a plane parallel to a plane formed in front-rear direction L and width direction W is described as an example, the partition wall may be formed by a plane having a predetermined angle with respect to a plane formed in front-rear direction L and width direction W, or may be formed by a plane based on up-down direction H and width direction W.

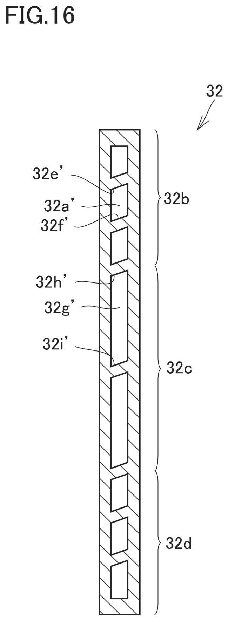

Fig. 16 is a diagram illustrating an example of a cross section of heat exchange plate 32 according to still another variation. As illustrated in Fig. 16, a plurality of flow passages 32a' are formed in each of end portions 32b and 32d of heat exchange plate 32. Flow passage 32a' is formed by partition walls 32e' and 32f. A wall surface of partition wall 32e' is formed by a plane having a predetermined angle with respect to a plane formed in front-rear direction L and width direction W. A wall surface of partition wall 32f is formed by a plane parallel to the wall surface of partition wall 32e'. Thus, as illustrated in Fig. 15, a cross section of flow passage 32a' is a parallelogram. In central portion 32c of heat exchange plate 32, a plurality of flow passages 32g' are formed. Flow passage 32g' is formed by a partition wall 32h' and a partition wall 32i'. A wall surface of partition wall 32h' and a wall surface of partition wall 32i' are each formed by a plane parallel to the wall surface of partition wall 32e'. Thus, a cross section of flow passage 32g' is also a parallelogram. The distance between partition wall 32h' and partition wall 32i' in flow passage 32g' formed in this manner is made larger than the distance between partition wall 32e' and partition wall 32f in flow passage 32a'. Also in this case, the Young's modulus of central portion 32c of heat exchange plate 32 can be made smaller than the Young's modulus of end portion 32b, 32d of heat exchange plate 32.

The above-described variations may be implemented by combining all or part thereof as desired.

Although embodiments of the present disclosure have been described, it should be understood that the herein-disclosed embodiments are presented by way of illustration and example in all respects and are not to be taken by way of limitation. The scope of the present disclosure is defined by the claims and intended to include all changes within the purport and scope equivalent to the claims.

## Claims

1. A power storage device comprising:
a plurality of power storage elements (29); and
a heat exchanger (32) disposed between the plurality of power storage elements (29) so as to face respective long side surfaces of the plurality of power storage elements (29) and extending in a long-side direction of the long side surface, wherein
Young's modulus of a central portion (32c) of the heat exchanger (32) in a short-side direction of the long side surface is smaller than Young's modulus of an end portion (32b, 32d) of the heat exchanger (32) in the short-side direction of the long side surface.

2. The power storage device according to claim 1, wherein
when viewed in the long-side direction, a plurality of partition walls (32e, 32f, 32h, 32i) forming a plurality of flow passages (32a, 32g) are formed inside the heat exchanger (32), and
a distance between the plurality of partition walls (32h, 32i) in the central portion (32c) of the heat exchanger (32) is larger than a distance between the plurality of partition walls (32e, 32f) in the end portion (32b, 32d) of the heat exchanger (32).

3. The power storage device according to claim 1, wherein
when viewed in the long-side direction, a plurality of partition walls (32s, 32t, 32u, 32v) forming a plurality of flow passages are formed inside the heat exchanger (32), and
a thickness of the partition wall (32s, 32t) in the end portion (32b, 32d) of the heat exchanger (32) is larger than a thickness of the partition wall (32u, 32v) in the central portion (32c) of the heat exchanger (32).

4. The power storage device according to claim 1, wherein when viewed in a first direction orthogonal to both of the long-side direction and the short-side direction, the central portion (32c) of the heat exchanger (32) is disposed so as to overlap a central portion of an electrode assembly (5) housed in the power storage element (29).

5. The power storage device according to claim 1, wherein
the power storage element (29) and the heat exchanger (32) are joined to each other with an adhesive, and
Young's modulus of the adhesive (32x) applied to the central portion (32c) of the heat exchanger (32) is smaller than Young's modulus of the adhesive (32w) applied to the end portion (32b, 32d) of the heat exchanger (32).
